(19) Europäisches Patentamt
European Patent Office
Office européen des brevets

(11) **EP 2 288 048 A1**

(12) **EUROPEAN PATENT APPLICATION**

(43) Date of publication:
**23.02.2011 Bulletin 2011/08**

(51) Int Cl.:
***H04B 7/02*** (2006.01)

(21) Application number: **09168370.6**

(22) Date of filing: **21.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation**
**Kadoma-shi**
**Osaka 571-8501 (JP)**

(72) Inventors:
• **Petrov, Mihail**
 **63225, Langen (DE)**
• **Kimura, Tomohiro**
 **Osaka-shi Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Rotated multi-dimensional constellations for improved diversity in fading channels**

(57) The present invention relates to digital data communication and provides an efficient method for generating high-dimensional constellations for digital data modulation with a high degree of modulation diversity, a method for transmitting and receiving data on the basis of such a constellation, and a corresponding apparatus. This is achieved by considering only rotation matrices with all elements on the diagonal having the same first absolute value and all other elements having the same second absolute value. In this manner, multi-dimensional rotation matrices can be generated having only a single independent parameter and a structure that is as regular as possible. The independent parameter can be configured in order to minimize the error probability for various constellation sizes.

# Fig. 12

**Description**

The present invention relates to digital data communication, in particular to methods for generating high-dimensional constellations for digital data modulation, methods for modulating and transmitting data on the basis of these constellations, and a corresponding apparatus.

BACKGROUND OF THE INVENTION

Fading is a major problem in communication systems. It represents random fluctuations in the amplitude of the received signal due to multi-path propagation. If the delay spread of the channel is larger than the symbol period of the signal, the fading is also frequency selective. The fading amplitude is usually approximated by a Rayleigh distribution and the fading is referred to as Rayleigh fading.

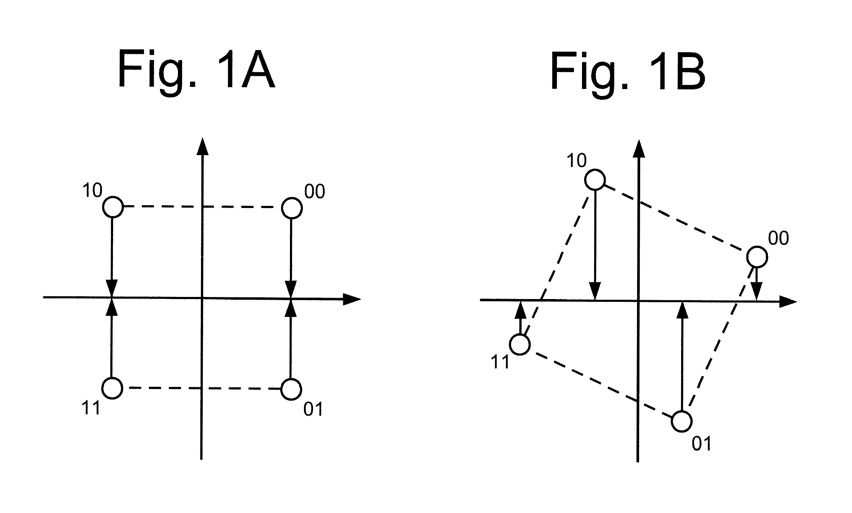

In digital communication systems, the information is encoded as a sequence of symbols belonging to a discrete alphabet, referred to as a constellation. Such a constellation has $N$ dimensions and encodes $B$ information bits per dimension. The number of possible values, also referred to as constellation points, is therefore $2^{N \times B}$ The number of bits per dimension $B$ directly determines the spectral efficiency of the transmission, given in bits/Hz. The number of dimensions $N$ has no effect on the spectral efficiency. An example constellation with $N$=2 and $B$=1 is illustrated in Fig. 1A.

Traditionally, for example in QAM constellations, each transmitted bit affects only one dimension. If that dimension undergoes a deep fading, all bits that modulate it will be extremely unreliable, which increases the error probability. This effect is illustrated by the errors in Fig. 1A: If the channel represented by the vertical axis fades away, constellation points 00 and 01, and constellation points 10 and 11 will be indiscernible.

If the constellation is modified such that each bit affects all dimensions, the resilience to fading is increased. A deep fade on one of the dimensions will affect all the bits of the constellation, but the effect would be less bad than in the previous case, so that on average, the error probability decreases. This is referred to in the literature as modulation diversity.

**Rotated Constellations**

One way to achieve modulation diversity is to rotate a (hyper-cubic) constellation to spread the effect of a channel fade over all its dimensions. This is illustrated in Fig. 1B for the case with $N$=2 and $B$=1, wherein constellation points remain discernible even after a deep fade of the channel represented by the vertical axis.

A multi-dimensional rotation can be achieved by multiplying the $N$-element signal vector by an $N \times N$ square matrix. The necessary and sufficient condition for a square matrix to be a rotation matrix (or a reflection matrix) is for it to be orthogonal, i.e.

$$R R^T = I \qquad\qquad (1)$$

This means that the rows/columns must be orthogonal unit vectors, i.e.

$$\sum_{i=1}^{n} r_{i,j} r_{i,k} = \delta_{j,k}, \qquad\qquad (2)$$

with $\delta_{j,k}$=1 if $j$=$k$, and $\delta_{j,k}$=0 if $j \neq k$.

This preserves the Euclidean distance between any two points of the constellation and ensures that the performance in channels with additive white Gaussian noise (AWGN channels) is not affected.

Obviously, not all rotations yield an improved modulation diversity. From the article "Modulation Scheme Designed for the Rayleigh Fading Channel" by K. Boulle and J. C. Belfiore, CISS 1992, it is known that the optimum rotation angle θ for 16-QRM is π/8. The corresponding 2-D rotation matrix is

$$R = \begin{pmatrix} \cos\theta & -\sin\theta \\ \sin\theta & \cos\theta \end{pmatrix}. \qquad\qquad (3)$$

Finding the optimum rotation for constellations of more than two dimensions is more complicated because there is no single optimization parameter such as the rotation angle in 2-D. In case of a 4-D constellation, for example, there are six independent rotation angles, each with its own partial rotation matrix. The partial rotation angles are also called Givens angles in the literature. The final 4-D rotation matrix is obtained by multiplying the 6 Givens rotation matrices, namely

$$R_4^{1,2} = \begin{pmatrix} +\cos\theta_{1,2} & -\sin\theta_{1,2} & 0 & 0 \\ +\sin\theta_{1,2} & +\cos\theta_{1,2} & 0 & 0 \\ 0 & 0 & 1 & 0 \\ 0 & 0 & 0 & 1 \end{pmatrix} , \quad R_4^{1,3} = \begin{pmatrix} +\cos\theta_{1,3} & 0 & -\sin\theta_{1,3} & 0 \\ 0 & 1 & 0 & 0 \\ +\sin\theta_{1,3} & 0 & +\cos\theta_{1,3} & 0 \\ 0 & 0 & 0 & 1 \end{pmatrix} ,$$

$$R_4^{1,4} = \begin{pmatrix} +\cos\theta_{1,4} & 0 & 0 & -\sin\theta_{1,4} \\ 0 & 1 & 0 & 0 \\ 0 & 0 & 1 & 0 \\ +\sin\theta_{1,4} & 0 & 0 & +\cos\theta_{1,4} \end{pmatrix} , \quad R_4^{2,3} = \begin{pmatrix} 1 & 0 & 0 & 0 \\ 0 & +\cos\theta_{2,3} & -\sin\theta_{2,3} & 0 \\ 0 & +\sin\theta_{2,3} & +\cos\theta_{2,3} & 0 \\ 0 & 0 & 0 & 1 \end{pmatrix} ,$$

$$R_4^{2,4} = \begin{pmatrix} 1 & 0 & 0 & 0 \\ 0 & +\cos\theta_{2,4} & 0 & -\sin\theta_{2,4} \\ 0 & 0 & 1 & 0 \\ 0 & +\sin\theta_{2,4} & 0 & +\cos\theta_{2,4} \end{pmatrix} , \quad R_4^{3,4} = \begin{pmatrix} 1 & 0 & 0 & 0 \\ 0 & 1 & 0 & 0 \\ 0 & 0 & +\cos\theta_{3,4} & -\sin\theta_{3,4} \\ 0 & 0 & +\sin\theta_{3,4} & +\cos\theta_{3,4} \end{pmatrix} \qquad (4)$$

From the article "Design of Trellis Coded QAM for Flat Fading and AWGN Channels" by B. D. Jelicic and S. Roy, IEEE Transactions on Vehicular Technology, Vol. 44, Feb. 1995, it is known that the optimization may be carried out over the 6-element vector $\theta = (\theta_{1,2}, \theta_{1,3}, \theta_{1,4}, \theta_{2,3}, \theta_{2,4}, \theta_{3,4})$. According to this article, the resulting optimum angles for a 4-D constellation with two bits per dimension are: (39°, 25°, 43°, 53°, 41°, 23°).

The disadvantage of this method is the number of parameters, especially for a large number of dimensions. For $N$ dimensions, the number of partial angles is equal to the number of possible combinations of 2 from a set of $N$, i.e.,

$$\binom{N}{2} = \frac{N!}{2!(N-2)!} = \frac{N(N-1)}{2} . \qquad (5)$$

Hence, the number of angles increases with the square of the number of dimensions, so the optimization problem becomes very difficult when this number is large.

The article "Signal Space Diversity: A Power- and Bandwidth-Efficient Diversity Technique for the Rayleigh Fading Channel" by J. Boutros and E. Viterbo, IEEE Transactions on Information Theory, Vol. 44, July 1998, discloses two different approaches, relying on the use of the algebraic number theory, which have the advantage of a reduced number of parameters.

The first approach allows the construction of rotation matrices by applying the "canonical embedding" to an algebraic number field. Two methods are proposed. The first method produces lattices with diversity $L=N/2$ for $N = 2^{e2}3^{e3}$, with e2, e3 = 0, 1, 2, ... Diversity means the minimum number of different values in the components of any two distinct points of the constellation. The second method produces lattices with diversity $L=N$. The possible values of $N$ are very limited. Possible values are: 3, 5, 9, 11, 15, etc.

A variant of this method for generating $N$-dimensional rotated constellations is also known from the article "Diagonal Algebraic Space-Time Block Codes" by M. O. Damen and K. Abed-Meraim and J. C. Belfiore, IEEE Transactions on Information Theory, Vol. 48, March 2002. The rotation matrix R has the following expression

$$R=\sqrt{\frac{2}{N}}\cos\left(\frac{2\pi}{8n}[4\times[1,2,\ldots,N]-1]^{T}[2\times[1,2,\ldots,N]-1]\right). \tag{6}$$

For $N = 4$ the value of $R$ is

$$R=\begin{pmatrix}+0.5879 & -0.1370 & -0.6935 & -0.3928\\ +0.1379 & -0.3928 & +0.5879 & -0.6935\\ -0.3928 & +0.6935 & -0.1379 & -0.5879\\ -0.6935 & -0.5879 & -0.3928 & -0.1379\end{pmatrix} \tag{7}$$

The resulting matrix is a rotation matrix (orthogonal) for any $N$, but the full modulation diversity is only achieved when $N$ is a power of 2.

Each of these methods can guarantee a certain degree of diversity. A severe disadvantage of these methods is that the resulting rotation matrix is fixed, having no parameter that allows the optimization for different constellation sizes.

The second approach first constructs rotation matrices with 2 and 3 dimensions, which can then be used as bases for constructing matrices with more dimensions using a Hadamard-like stacked expansion:

$$R=\begin{pmatrix}+R_{1} & -R_{2}\\ +R_{2} & +R_{1}\end{pmatrix} \tag{8}$$

The base 2-D and 3-D rotation matrices have a single independent parameter, which is chosen so that the product distance of the constellation is maximized. A 4-D matrix is constructed from two 2-D matrices according to the above formula. Because of the relative small dimension, it is possible to find an algebraic relationship between the two parameters, so that the product distance is maximized. For larger dimensions, such an optimization becomes intractable, which is the primary disadvantage of this approach.

**Mapping constellation components to ensure independent fading**

Another aspect concerns the separation and mapping of the $N$ dimensions of the rotated constellation so that they experience independent fading. This is a key aspect necessary for achieving the expected diversity performance.

The $N$ constellation components can be transmitted over different time slots, frequencies, transmitter antennas, or a combination thereof. Further signal processing is possible before transmission. The critical aspect is that the $N$ dimensions must experience different fading, ideally uncorrelated.

The spreading of the $N$ dimensions across different time slots, frequencies, and antennas can be achieved for example through appropriate interleaving and mapping.

**Mapping constellation components to transmitted complex cells**

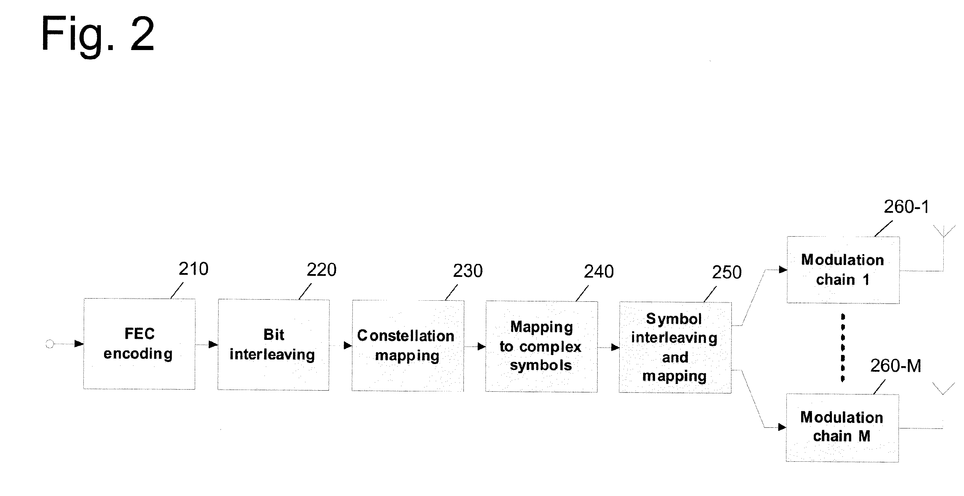

Another aspect concerns the mapping of the $N$ real dimensions of the rotated constellation to complex symbols for transmission. In order to ensure the desired diversity, the $N$ dimensions must be mapped to different complex symbols. The complex symbols are then spread as described at the previous point, e.g. through interleaving and mapping, so that at the reception the $N$ dimensions experience uncorrelated fading. A possible block schematic is shown in Fig. 2, containing: functional block 210 for forward error correction (FEC) encoding, functional block 220 for bit interleaving, functional block 230 for mapping to the rotated constellation, functional block 240 for mapping of the $N$ constellation dimensions to complex symbols, functional block 250 for symbols interleaving and mapping to different time slots, frequencies, transmitter antennas, or a combination thereof, and modulation chains 260-1, ..., 260-M, one for each transmit antenna.

The interleaver can be a block or a convolution interleaver.

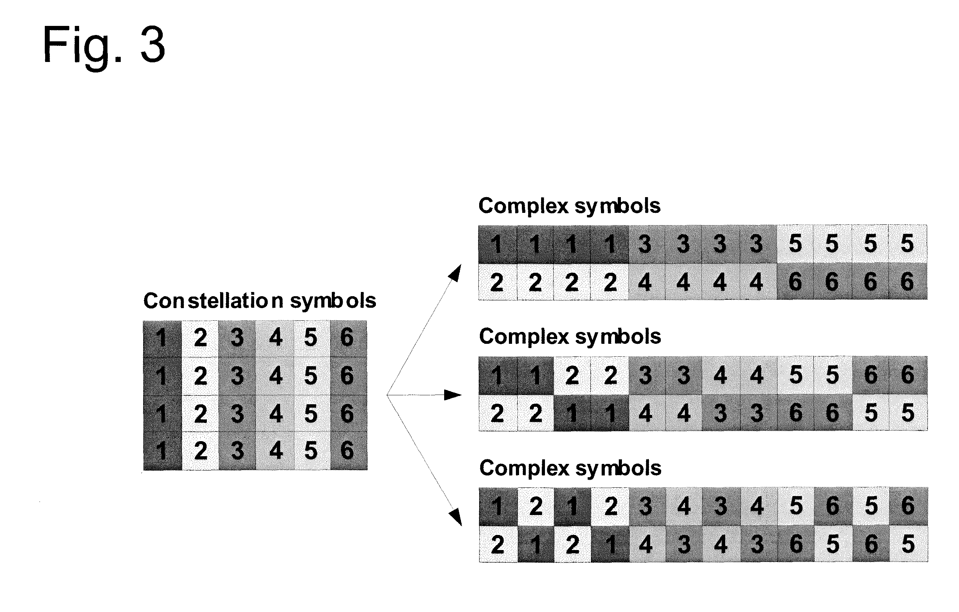

Regarding the mapping of the $N$ dimensions to complex symbols there are multiple possibilities, some of which are shown in Fig. 3. Its essential function is to map the N dimensions of each constellation symbol to different complex symbols.

Regarding the original mapping of the information bits on the non-rotated hyper-cubic constellations, each dimension is modulated separately by $B$ bits, using either a binary or a Gray mapping, so the number of discrete values is $2^B$ and the number of constellation points $2^{BN}$.

Generally, the input of the rotated constellation mapping (constellation mapping & rotation) is the output of a forward error correction (FEC) encoder, to which an optional bit interleaving step is applied. The bit interleaving is usually required when there are more than 1 bit per dimension ($B > 1$). The FEC encoding introduces redundant bits in a controlled fashion, so that propagation errors can be corrected in the receiver. Although the overall spectral efficiency decreases, the transmission becomes overall more robust, i.e. the bit error rate (BER) decays much faster with the SNR.

The best FEC codes known so far, which are also the most used in new standards, are the turbo codes and the low-density parity check (LDPC) codes.

### Receiver Side

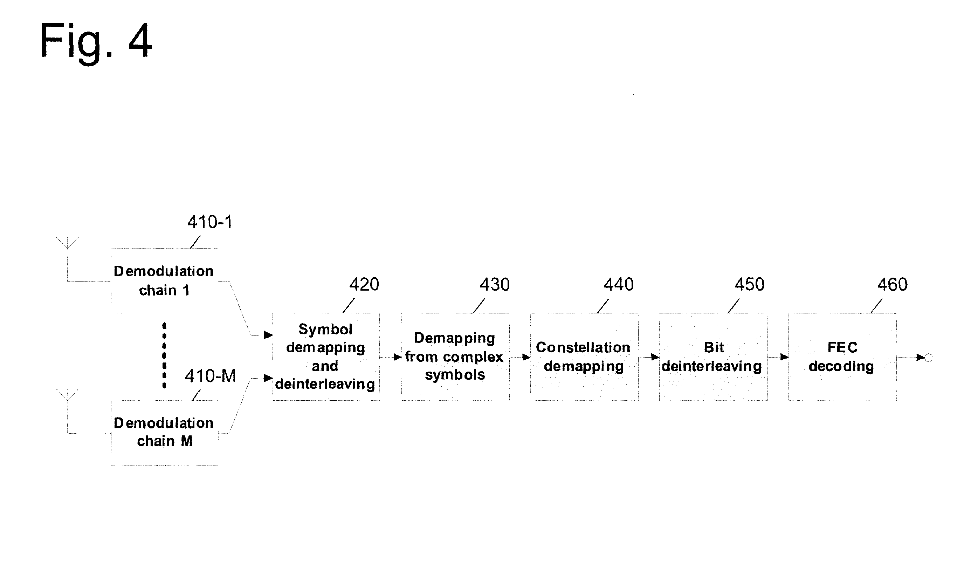

On the receiver side, the exact inverse steps of the transmitter must be performed. A possible block schematic, which matches the block schematic of the transmitter, is shown in Fig. 4.

The constellation demapping can be performed in two ways:

(i) First de-rotate the constellation, then extract the bits for each dimension separately

(ii) Decode the bits of all dimensions in one step

The first solution is the most simple, but its performance is suboptimal. The performance is even worse for rotated constellations than for non-rotated constellations. Due to its simplicity, this solution may be used in some low-cost receivers.

The second solution is more complex, but offers much better performance in terms of BER at a given SNR. In the following, this solution will be described in greater detail.

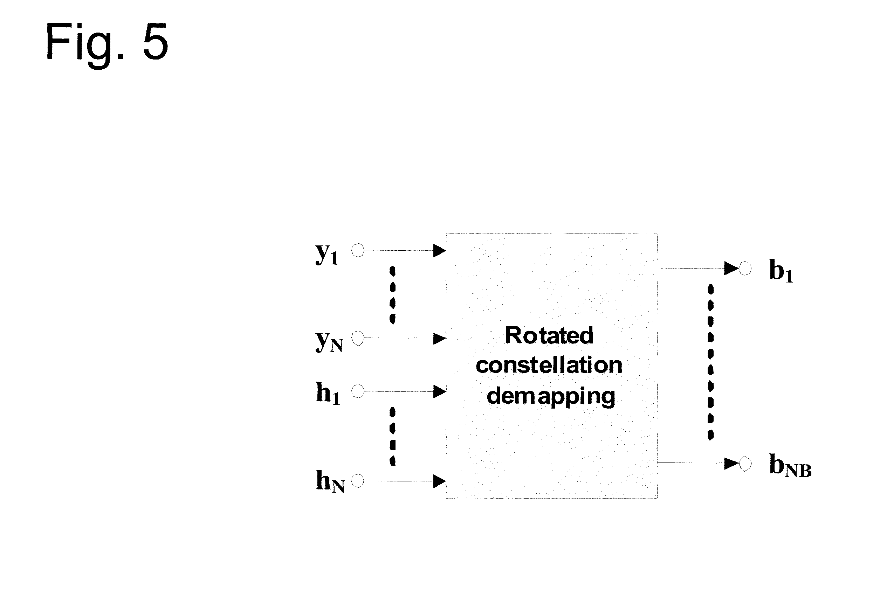

Like for the transmitter, a preferred embodiment includes a FEC decoder after the constellation demapping, with the optional bit deinterleaver in between, as shown in Fig. 4. More exactly, the rotated constellation demapping receives $N$-dimensional symbols y and the associated (estimated) fading coefficients h and from each symbols it extracts $nb$ bits, as shown in Fig. 5.

When FEC decoding is used, the constellation demapping can no longer be performed by doing a hard decision because the performance of the error correction would be suboptimal. Instead, "soft bits" must be used, either in the form of probabilities or in the form of log-likelihood ratios (LLR). The LLR representation is preferred because probability multiplications can be conveniently expressed as sums. By definition, the LLR of a bit $b_k$ is

$$L(b_k|\mathbf{y}) \triangleq \ln \frac{P(b_k = 1|\mathbf{y})}{P(b_k = 0|\mathbf{y})}$$

where $P(b_k=0|y)$ and $P(b_k=1|y)$ are the a-priori probabilities that $b_k = 0/1$ was transmitted when y is received. According to the known theory, the LLR of a bit $b_k$ of a constellation has the following exact expression:

$$L(b_k) = \ln \frac{\sum_{\mathbf{s} \in \mathcal{S}_k^1} \exp\left(-\frac{\|\mathbf{y} - \mathbf{Hs}\|^2}{2\sigma^2}\right)}{\sum_{\mathbf{s} \in \mathcal{S}_k^0} \exp\left(-\frac{\|\mathbf{y} - \mathbf{Hs}\|^2}{2\sigma^2}\right)}$$

where k is the bit index, y is the received symbol vector, H is the diagonal matrix with the associated fading coefficients, s is a constellation point, $\|*\|2$ is the squared norm, and $\sigma^2$ is the noise variance. For an N-dimensional constellation, the squared norm represents the Euclidean distance from the received symbol y to the faded constellation symbol Hs in the N-dimensional space and has the following expression.

$$\|\mathbf{y} - \mathbf{Hs}\|^2 = \sum_{n=1}^{N} |y_n - h_n s_n|^2$$

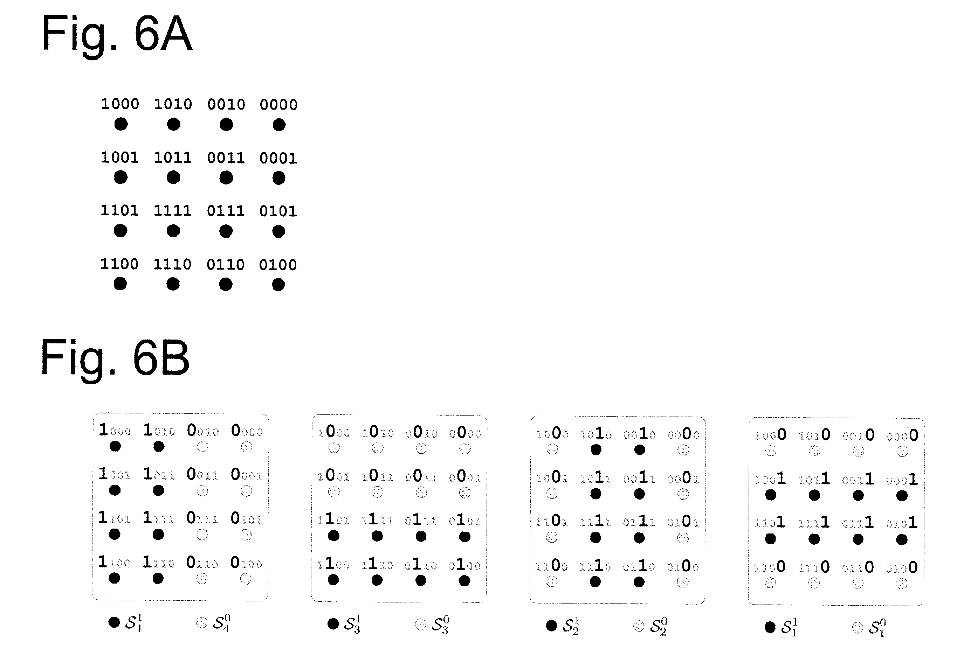

Each bit $b_k$ divides the constellation into two partitions of equal size, $S_k^0$ and $S_k^1$, corresponding to those points for which $b_k$ is 0 and 1 respectively. An example is shown in Fig. 6 for a classical 16-QAM constellation with Gray encoding. Figs. 6A shows the constellation encoding and Fig. 6B the two partitions for each bit $b_k$.

The exact expression for the LLR is difficult to calculate due to the exponentials, divisions and the logarithm. In practice, the following approximation is made, called max-log, which introduces negligible errors:

$$\ln(e^{a_1} + e^{a_2}) \approx \max(a_1, a_2) \rightarrow \ln(e^{-a_1} + e^{-a_2}) \approx \min(a_1, a_2)$$

This leads to a much more simple expression for the LLR

$$L(b_k) \approx \frac{1}{2\sigma^2} \min_{\mathbf{s} \in \mathcal{S}_k^0} \|\mathbf{y} - \mathbf{Hs}\|^2 - \frac{1}{2\sigma^2} \min_{\mathbf{s} \in \mathcal{S}_k^1} \|\mathbf{y} - \mathbf{Hs}\|^2$$

For each received symbol y the distances to all $2^{BN}$ constellation points must be computed, and the corresponding minimum for each partition determined.

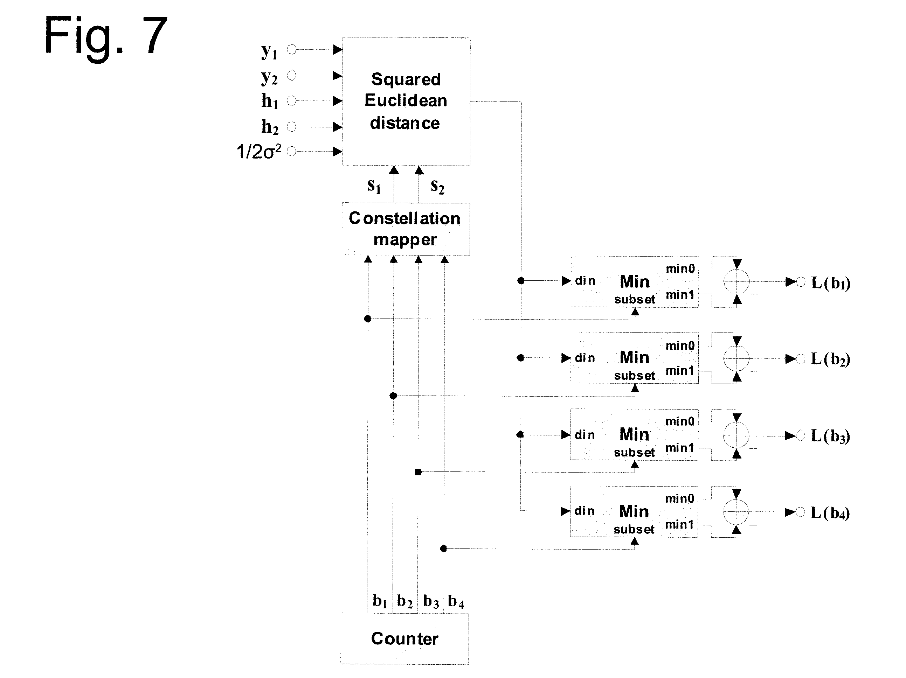

A preferred hardware implementation of an LLR demapper for a 16-QAM rotated constellation ($N$ = 2, $B$ = 2) is shown in Fig. 7.

For each received point y, the counter iterates over all $2^4$=16 constellation points. The constellation points are selected from a look-up table using the counter value as an index and the associated squared Euclidean distance is then computed with a dedicated sub-block. For each bit, the corresponding minimum squared distances for the two partitions are maintained. The two constellation partitions for each bit are simply indicated by the corresponding bit of the counter.

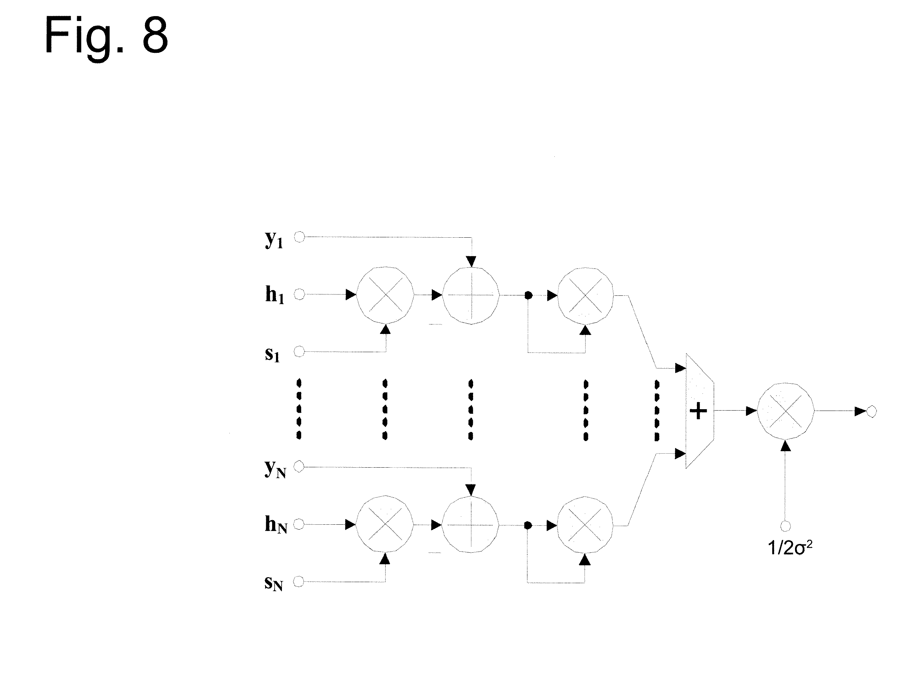

A possible schematic for the computation of the $N$-dimensional squared Euclidean distance is shown in Fig. 8.

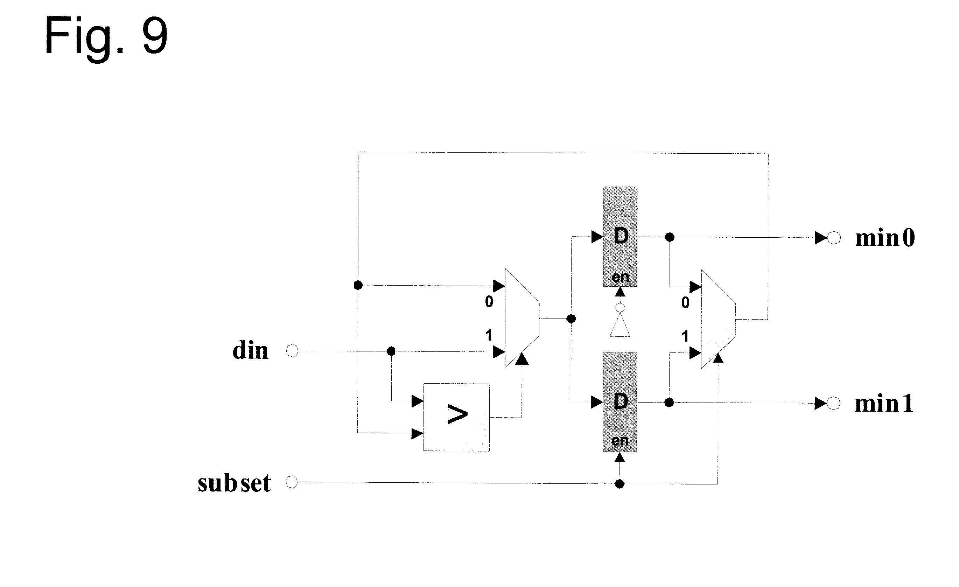

A possible schematic for the computation of the minimum squared distances for each bit is shown in Fig. 9. The 1-bit subset (or partition) input indicates the current partition.

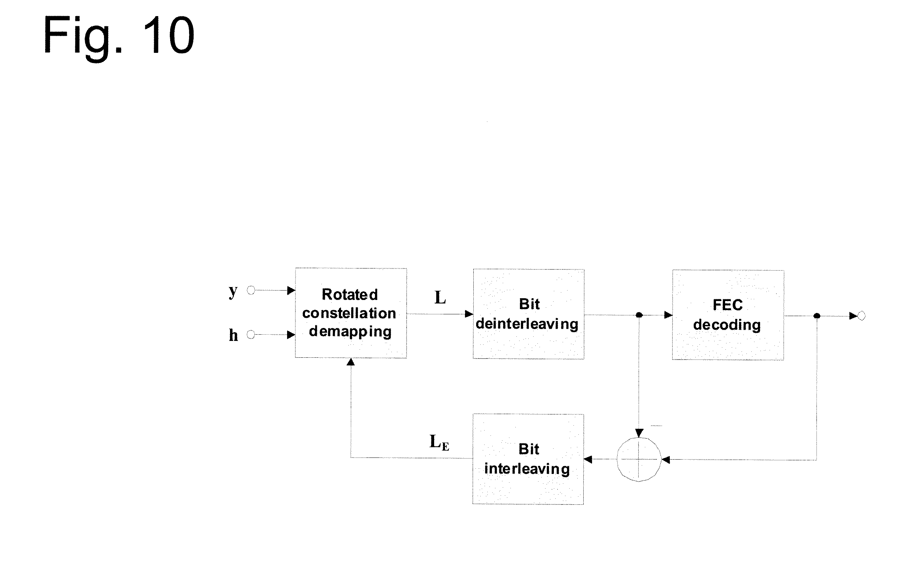

A significant improvement in the receiver performance can be achieved by using iterative decoding, whereby the constellation demapping and the FEC decoding are connected in a loop, as described in Fig. 10. The deinterleaved difference between the output and the input to the FEC decoding, $L_E$, is called extrinsic information and is fed back to the demapper in order to aid the demapping process. In this case it is essential that the FEC decoding produces soft bits, e.g. in the form of LLRs.

As known in the literature, the formula for computing the LLR for bit $b_k$ is given by

$$L(b_k) \approx \min_{\mathbf{x} \in \mathcal{X}_k^0} \left\{ \frac{1}{2\sigma^2} \|\mathbf{y} - \mathbf{Hs(x)}\|^2 + \sum_{\substack{i=1 \\ x_i=1, i \neq j}}^{K} L_E(b_i) \right\}$$

$$- \min_{\mathbf{x} \in \mathcal{X}_k^1} \left\{ \frac{1}{2\sigma^2} \|\mathbf{y} - \mathbf{Hs(x)}\|^2 + \sum_{\substack{i=1 \\ x_i=1, i \neq j}}^{K} L_E(b_i) \right\}$$

where **x** represents the K = NB bits associated with each constellation point and $X_k^0$ and $X_k^1$ represent the two constellation partitions associated with bit k, each constellation point being represented by the NB bits instead of the N integer coordinates. Furthermore, s is expressed as s(x) and represents the constellation mapping function.

For example, $X_3^0$ and $X_3^1$ are shown below.

| $X_3^0$ | $X_3^1$ |
|---------|---------|
| 0000 | 0100 |
| 0001 | 0101 |

(continued)

| $x_3{}^0$ | $X_3{}^1$ |
|---|---|
| 0010 | 0110 |
| 0011 | 0111 |
| 1000 | 0100 |
| 1001 | 1101 |
| 1010 | 1110 |
| 1011 | 1111 |

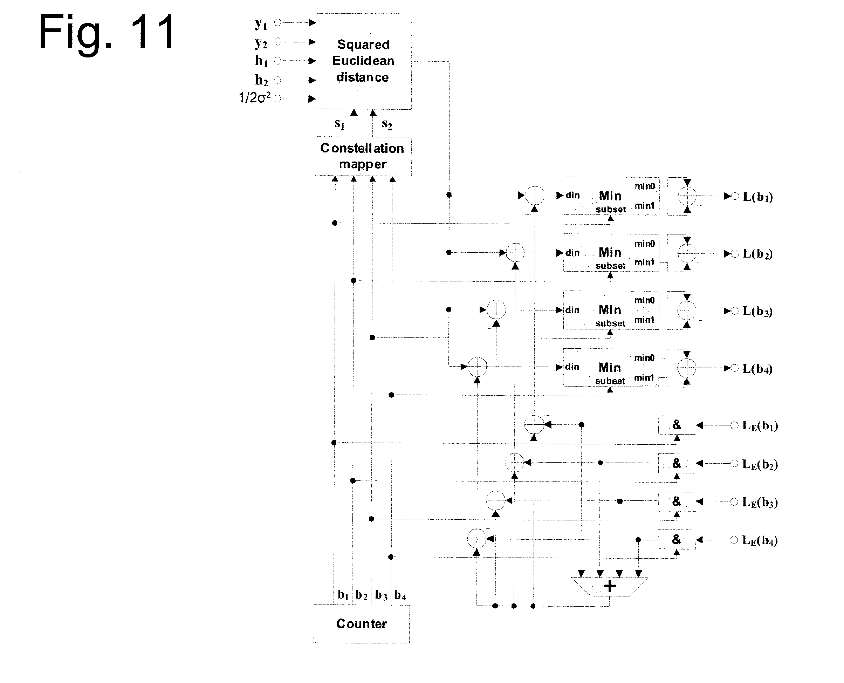

A possible implementation of the constellation demapper for iterative decoding is shown in Fig. 11. Note the similarity to the demapper for non-iterative decoding.

SUMMARY OF THE INVENTION

It is the object of the present invention to provide an efficient method for generating high-dimensional constellations for digital data modulation with a high degree of modulation diversity, a method for transmitting and receiving data on the basis of such a constellation, and a corresponding apparatus.

This is achieved by the features as set forth in the independent claims.

Preferred embodiments are the subject matter of dependent claims.

It is the particular approach of the present invention to consider only rotation matrices with all elements on the diagonal having the same first absolute value and all other elements having the same second absolute value.

According to a first aspect of the present invention, an apparatus for transmitting a block of data over a plurality of transmission channels is provided. The apparatus comprises a modulator for selecting a constellation point of a plurality of constellation points in accordance with the block of data to be transmitted, each of said constellation points having a plurality of components; a transmitter for transmitting each component of the selected constellation point over a different one of the plurality of transmission channels, wherein the plurality of constellation points is defined by positions within an $N$-dimensional space obtained by applying an orthogonal transformation to a subset of the $N$-dimensional integer lattice $\mathbb{Z}^N$, and is characterized in that $N$ is a multiple of four; and the orthogonal transformation has an $N$-by-$N$ matrix representation with absolute values of all elements on the main diagonal equal to a first value and with absolute values of all elements not on the main diagonal equal to a non-zero second value.

The apparatus preferably further comprises a mapper for mapping each component of the selected constellation point to one of the plurality of transmission channels over which the component is to be transmitted, such that the fading of the transmission channels, over which the components of the selected constellation point are transmitted, is uncorrelated. In this manner, transmission performance can be optimized, even in the presence of fading. Examples for transmission channels with uncorrelated fading may comprise different time slots, different frequencies, different transmitter antennas, or combinations thereof.

According to a further aspect of the present invention, an apparatus for receiving a block of data over a plurality of transmission channels is provided. The apparatus comprises a receiver for receiving a plurality of component signals over the plurality of transmission channels; a demodulator for selecting a constellation point of a plurality of constellation points in accordance with the plurality of received component signals, wherein the plurality of constellation points is defined by positions within an $N$-dimensional space obtained by applying an orthogonal transformation to a subset of the $N$-dimensional integer lattice $\mathbb{Z}^N$, and is characterized in that $N$ is a multiple of four; and the orthogonal transformation has an $N$-by-N matrix representation with absolute values of all elements on the main diagonal equal to a first value and with absolute values of all elements not on the main diagonal equal to a non-zero second value.

In a preferred embodiment, the plurality of transmission channels comprises a plurality of different carriers and/or a plurality of different symbols in an orthogonal frequency division multiplexing (OFDM) scheme.

According to a further aspect of the present invention, a method for transmitting a block of data over a plurality of transmission channels is provided. The method comprises the steps of selecting a constellation point of a plurality of constellation points in accordance with the block of data to be transmitted, each of said constellation points having a plurality of components; transmitting each component of the selected constellation point over a different one of the plurality of transmission channels, wherein the plurality of constellation points is defined by positions within an $N$-dimensional space obtained by applying an orthogonal transformation to a subset of the $N$-dimensional integer lattice $\mathbb{Z}^N$, and is characterized in that $N$ is a multiple of four; and the orthogonal transformation has an $N$-by-$N$ matrix representation with absolute values of all elements on the main diagonal equal to a first value and with absolute values of all elements not on the main diagonal equal to a non-zero second value.

According to a further aspect of the present invention, a method for receiving a block of data over a plurality of transmission channels is provided. The method comprises the steps of receiving a plurality of component signals over the plurality of transmission channels; demodulating the plurality of received component signals by selecting a constellation point of a plurality of constellation points in accordance with the plurality of received component signals, wherein the plurality of constellation points is defined by positions within an $N$-dimensional space obtained by applying an orthogonal transformation to a subset of the $N$-dimensional integer lattice $\mathbb{Z}^N$, and is characterized in that $N$ is a multiple of four; and the orthogonal transformation has an $N$-by-$N$ matrix representation with absolute values of all elements on the main diagonal equal to a first value and with absolute values of all elements not on the main diagonal equal to a non-zero second value.

According to another aspect of the present invention, a method for generating a multi-dimensional constellation for a digital modulation scheme in a data communication system is provided. The method comprises the steps of receiving a plurality of vectors of a multi-dimensional vector space; obtaining constellation points of the multi-dimensional constellation by applying an orthogonal transformation to the plurality of vectors received, wherein the orthogonal transformation is adapted for increasing the minimum number of different values in the components of any two distinct multi-dimensional constellation points relative to the minimum number of different values in the components of any two distinct vectors received, and is characterized in that the orthogonal transformation has an $N$-by-$N$ matrix representation, $N$ being a multiple of four, with absolute values of all elements on the main diagonal equal to a first value and with absolute values of all elements not on the main diagonal equal to a non-zero second value.

In a preferred embodiment, the method further comprises the steps of selecting a rotation factor r as a real number between 0 and 1; computing the first value $a$ by evaluating the expression $a = \sqrt{1 - \dfrac{r(N-1)}{N}}$; computing the second value b by evaluating the expression $b = \sqrt{\dfrac{r}{N}}$; and determining the orthogonal transformation by selecting for each element $(i,j)$ of its matrix representation a sign value $s_{i,j}$ such

that $R = \begin{pmatrix} s_{1,1}a & s_{1,2}b & \cdots & s_{1,N}b \\ s_{2,1}b & s_{2,2}a & & \vdots \\ \vdots & & \ddots & s_{N-1,N}b \\ s_{N,1}b & \cdots & s_{N,N-1}b & s_{N,N}a \end{pmatrix}$ is orthogonal. In this manner, there is only a single independent parameter r that may be used for optimizing the resulting constellation.

Preferably, the selected rotation factor maximizes the minimum number of different values in the components of any two distinct multi-dimensional constellation points. In this manner, a high degree of modulation diversity and therewith an increased robustness in the presence of fading can be achieved while preserving spectral efficiency.

Preferably, the received plurality of vectors represents a subset of the $N$-dimensional integer lattice $\mathbb{Z}^N$, which lends itself to a straightforward numerical implementation.

The above and other objects and features of the present invention will become more apparent from the following description and preferred embodiments given in conjunction with the accompanying drawings, in which:

Fig. 1A    illustrates an example constellation in 2D and the effect of fading;

Fig. 1B    illustrates an example constellation in 2D that is obtained by rotating the constellation of of Fig. 1A and the effect of fading;

Fig. 2    shows a block diagram of a conventional transmitter;

Fig. 3    is a schematic drawing illustrating the mapping of constellation symbols to complex symbols;

Fig. 4    shows a block diagram of a conventional receiver;

Fig. 5       is an illustration of the inputs and the outputs of an rotated constellation demapping block;

Fig. 6A      shows an example of a conventional 16-QAM constellation with Gray encoding;

Fig. 6B      illustrates the two partitions for each bit of the constellation of Fig. 6A;

Fig. 7       shows an example hardware implementation of an LLR demapper for a rotated 16-QAM constellation;

Fig. 8       shows an example hardware implementation for the computation of the $N$- dimensional squared Euclidean distance;

Fig.9        shows an example hardware implementation for the computation of the minimum squared distances for each bit;

Fig. 10      shows a block diagram for iterative decoding;

Fig. 11      shows an example hardware implementation of the constellation demapper for iterative decoding;

Fig. 12      shows a block diagram of a transmitter according to an embodiment of the present invention; and

Fig. 13      shows a block diagram of a receiver according to an embodiment of the present invention.

DETAILED DESCRIPTION

The present invention aims at generating multi-dimensional rotation matrices having a single independent parameter and a structure that is as regular as possible. The parameter can be configured in order to minimize the error probability for various constellation sizes. Specifically, the present invention is based on the idea of imposing the following two constraints on the rotation matrix employed for obtaining a rotated constellation, viz.

(i) Each output must have a dominant input.

(ii) The remaining inputs must have equal weights.

Both conditions are fulfilled if the matrix is of the following form (for $N = 4$):

$$R = \begin{pmatrix} s_{1,1}a & s_{1,2}b & s_{1,3}b & s_{1,4}b \\ s_{2,1}b & s_{2,2}a & s_{2,3}b & s_{2,4}b \\ s_{3,1}b & s_{3,2}b & s_{3,3}a & s_{3,4}b \\ s_{4,1}b & s_{4,2}b & s_{4,3}b & s_{4,4}a \end{pmatrix} \tag{9}$$

or, more generally,

$$R = \begin{pmatrix} s_{1,1}a & s_{1,2}b & \cdots & s_{1,N}b \\ s_{2,1}b & s_{2,2}a & & \vdots \\ \vdots & & \ddots & s_{N-1,N}b \\ s_{N,1}b & \cdots & s_{N,N-1}b & s_{N,N}a \end{pmatrix}, \tag{10}$$

with real parameters $a$, $b$, and sign values $s_{i,j} \in \{-1,+1\}$. Obviously, the same advantages can be achieved by permuting rows and/or columns of the matrix $R$.

The normalization condition establishes a relationship between parameters $a$ and $b$:

$$a^2 + (N-1)b^2 = 1 .\qquad(11)$$

The rotation matrix has therefore only one independent parameter. In the following we define a "rotation factor" r between 0 and 1, as follows:

- No rotation: $r = 0 \rightarrow b = 0$, $a = 1$

- Maximum rotation: $r = 1 \rightarrow b = a = \mathrm{sqrt}(1/N)$

Therefore, $a$ and $b$ can be expressed in terms of $r$ as:

$$a = \sqrt{1 - \frac{r(N-1)}{N}} \quad , \quad b = \sqrt{\frac{r}{N}}\qquad(12)$$

The advantage of using a normalized rotation factor is that the range is always 0...1 regardless of the number of dimensions. The optimal value for r depends on the constellation size, that is, the number of dimensions $N$ and the number of bits $B$ per dimension for square/cubic constellations.
The only open issue is what values the sign matrix should take. The sign matrix is defined as

$$S = \begin{pmatrix} s_{1,1} & \cdots & s_{1,N} \\ \vdots & \ddots & \vdots \\ s_{N,1} & \cdots & s_{N,N} \end{pmatrix} .\qquad(13)$$

A necessary condition, which is not sufficient however, is that the matrix S must be orthogonal, up to a scaling factor. Such matrices are known in the literature as Hadamard. Because $a$ and b in the $R$ matrix are different, the following additional condition must be imposed:

$$s_{i,i}\, s_{i,j} = -s_{j,i}\, s_{j,j} \text{ for all } i \neq j .\qquad(14)$$

This condition ensures that any $a \times b$ product cancels out with the corresponding $b \times a$ product.
If all elements on the main diagonal have the same sign and the diagonals above and below it have opposite signs, this condition is fulfilled. Examples of such particularly preferred sign matrices for the 4-D and 8-D cases are given here below.

$$S = \begin{pmatrix} +1 & -1 & -1 & -1 \\ +1 & +1 & -1 & +1 \\ +1 & +1 & +1 & -1 \\ +1 & -1 & +1 & +1 \end{pmatrix}\qquad(15)$$

$$S = \begin{vmatrix} +1 & -1 & -1 & -1 & -1 & -1 & -1 & -1 \\ +1 & +1 & -1 & +1 & -1 & +1 & -1 & +1 \\ +1 & +1 & +1 & -1 & -1 & -1 & +1 & +1 \\ +1 & -1 & +1 & +1 & -1 & +1 & +1 & -1 \\ +1 & +1 & +1 & +1 & +1 & -1 & -1 & -1 \\ +1 & -1 & +1 & -1 & +1 & +1 & -1 & +1 \\ +1 & +1 & -1 & -1 & +1 & +1 & +1 & -1 \\ +1 & -1 & -1 & +1 & +1 & -1 & +1 & +1 \end{vmatrix} \qquad (16)$$

It is to be noted that Hadamard matrices are only possible for sizes that are multiples of 4. Therefore, rotation matrices disclosed in the present invention exist also only for numbers of dimensions that are multiple of 4. The constellations according to the present invention are thus preferably of the dimension 4, 8, 12, 16, and so forth.

Once the sign matrix S has been fixed, the resulting rotation matrix may be optimized for a certain constellation size, i.e., the number of bits or constellation points per dimension, by selecting the rotation factor r accordingly. To this end, any suitable optimization algorithm may be employed. As an optimization target the minimum number of different values in the components of any two distinct multi-dimensional constellation points may be employed. Other optimization targets may be used as well. According to a preferred embodiment of the present invention, a cost function is defined that takes the minimum absolute differences between corresponding components of any two distinct multi-dimensional constellation points into account. An example of such a cost function computes the minimum over all $N$ absolute differences between corresponding components of two constellation points and sums these minimum values or their squares over all pairs of constellation points.

The rotated constellation may already be useful if the minimum number of different values in the components of any two distinct constellation points is larger than in the unrotated constellation. Also, the rotated constellation may already be useful if the minimum absolute difference of two corresponding components of any two distinct constellation points is larger than in the unrotated constellation.

In a preferred embodiment of the present invention, the entire transmission process including the transmission channel and the decoder is simulated in order to determined the bit error rate. The rotation factor may then be adapted so as to minimize the determined bit error rate.

Hence, the present invention provides a method for generating a high-dimensional constellation that can be used for modulating and transmitting data over a plurality of fading (sub-) channels or slots at optimum spectral efficiency. To this end, a conventional hyper-cubic constellation with the desired number of dimensions $N$ and the desired number of bits per dimension (i.e., number of constellation points per direction) is set up, for instance, by selecting an appropriate subset of the integer lattice $\mathbb{Z}^N$. Here, $\mathbb{Z}^N$ is the set of all points of the $N$-dimensional space having integer coordinates. This hyper-cubic constellation may, for instance, be a generalization of a conventional regular QAM constellation to $N$ dimensions. However, other initial constellations may be used, such as generalizations of circular constellation to $N$ dimensions, and so on.

Once the initial constellation is fixed, it may be subjected to a rotation by applying the above defined rotation matrix R to each of the initial constellation points so as to obtain a rotated set of constellation points, i.e., a rotated constellation. The rotated constellation may be more favourable than the initial constellation in terms of the degree of modulation diversity provided, depending on the particular choice of the "rotation factor" r. The rotation factor, and therewith the rotated constellation, may be varied, as described above, so as to obtain a constellation that provides maximum modulation diversity, or at least a certain minimum degree of modulation diversity, as required by the specific application.

The present invention also provides a method and an apparatus for efficiently transmitting and receiving data over a plurality of fading (sub-) channels or slots on the basis of a modulation scheme that employs a constellation as obtained by the above described method. The inventive method or apparatus may either perform the above described method in order to obtain the desired constellation, or use a set of predefined and prestored constellation points that have been calculated by the above described method. In the latter case, the inventive method or apparatus may access a storage means, wherein information indicating the position of at least some of the constellation points is stored.

Another aspect of the present invention concerns the separation and mapping of the $N$ dimensions of the rotated constellation so that they experience independent fading during transmission. This is a key aspect necessary for achieving the expected diversity performance.

Generally, this can be achieved by transmitting each of the $N$ components of a constellation point over a distinct transmission channel, provided that the fading of these channels is uncorrelated. Here, the term "distinct transmission channel" may refer to one of several different time slots, one of several different frequencies, one of several different transmitter antennas, or a combination thereof. In the context of orthogonal frequency division multiplexing (OFDM), the term "distinct transmission channel" may in particular refer to one of a plurality of different active carriers or one of a plurality of different OFDM symbols or a combination thereof. In the context of a single carrier system, the term "distinct transmission channel" may in particular refer to one of a plurality of different symbols or different time slots.

Further signal processing is possible before transmission. The critical aspect is that the $N$ dimensions must experience different fading, ideally uncorrelated.

The spreading of the $N$ dimensions across different time slots, frequencies, and antennas can be achieved for example through appropriate interleaving and mapping.

Another aspect of the present invention concerns the mapping of the $N$ real dimensions of the rotated constellation to complex symbols for transmission. Since fading of the in-phase component and the quadrature component of a given channel is typically identical, a complex symbol may not be made up of two different components of the same constellation point. Instead, the $N$ components of a constellation point must be mapped to different complex symbols in order to ensure the desired diversity.

The complex symbols generated in this manner are then spread in a conventional manner over the available time slots, frequencies, and/or antennas, e.g. through interleaving and mapping, so that the $N$ dimensions are subjected to uncorrelated fading.

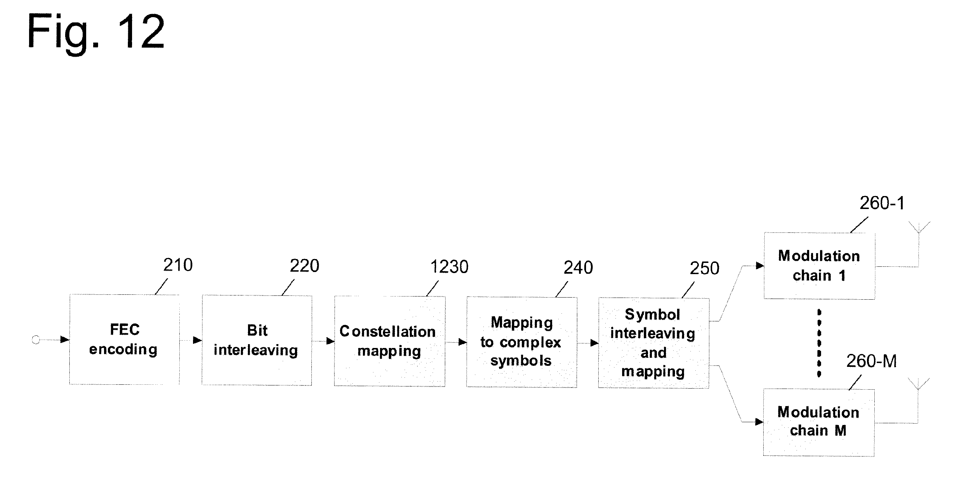

A block diagram of a transmitter according to an embodiment of the present invention is shown in Fig. 12, which is similar to Fig. 2, wherein like elements are denoted by like reference numerals and a detailed explanation thereof is omitted. The block diagram of Fig. 12 differs from that of Fig. 2 in that the constellation mapping performed by functional block 1230 is performed on the basis of a constellation that is obtained applying a rotation matrix as defined in Eq. (10).

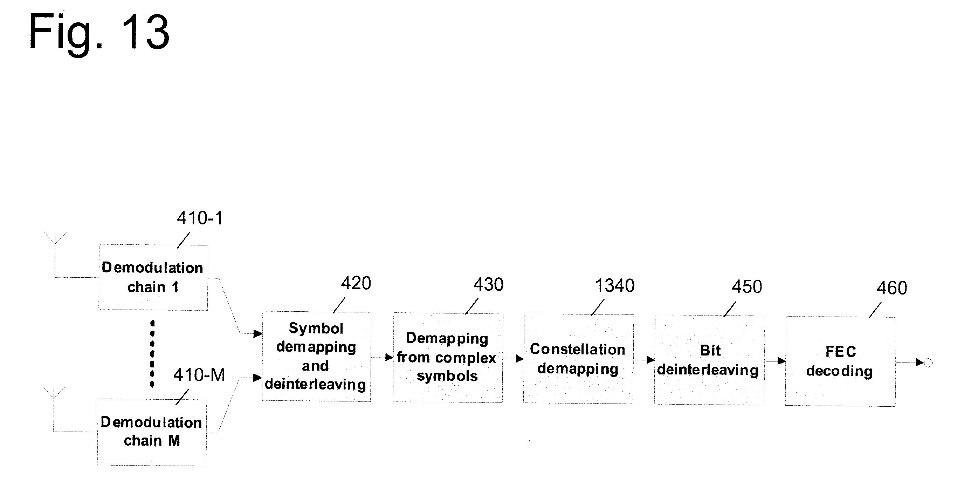

A block diagram of a receiver according to an embodiment of the present invention is shown in Fig. 13, which is similar to Fig. 4, wherein like elements are denoted by like reference numerals. The block diagram of Fig. 13 differs from that of Fig. 4 in that the constellation demapping performed by functional block 1340 is performed on the basis of a constellation that is obtained applying a rotation matrix as defined in Eq. (10).

Summarizing, the present invention relates to digital data communication and provides an efficient method for generating high-dimensional constellations for digital data modulation with a high degree of modulation diversity, a method for transmitting and receiving data on the basis of such a constellation, and a corresponding apparatus. This is achieved by considering only rotation matrices with all elements on the diagonal having the same first absolute value and all other elements having the same second absolute value. In this manner, multi-dimensional rotation matrices can be generated having only a single independent parameter and a structure that is as regular as possible. The independent parameter can be configured in order to minimize the error probability for various constellation sizes.

**Claims**

1. An apparatus for transmitting a block of data over a plurality of transmission channels, the apparatus comprising:

   a modulator for selecting a constellation point of a plurality of constellation points in accordance with the block of data to be transmitted, each of said constellation points having a plurality of components;
   a transmitter for transmitting each component of the selected constellation point over a different one of the plurality of transmission channels,
   wherein the plurality of constellation points is defined by positions within an $N$-dimensional space obtained by applying an orthogonal transformation to a subset of the $N$-dimensional integer lattice $\mathbb{Z}^N$,
   **characterized in that**
   $N$ is a multiple of four; and
   the orthogonal transformation has an $N$-by-$N$ matrix representation with absolute values of all elements on the main diagonal equal to a first value and with absolute values of all elements not on the main diagonal equal to a non-zero second value.

2. An apparatus according to claim 1, further comprising
   a mapper for mapping each component of the selected constellation point to one of the plurality of transmission channels over which the component is to be transmitted, such that the fading of the transmission channels, over which the components of the selected constellation point are transmitted, is uncorrelated.

**3.** An apparatus according to claim 1 or 2, wherein the transmitter is adapted for transmitting each component of the selected constellation point over a different one of a plurality of time slots, frequencies, transmitter antennas, or combinations thereof.

**4.** An apparatus for receiving a block of data over a plurality of transmission channels, the apparatus comprising:

a receiver for receiving a plurality of component signals over the plurality of transmission channels,
a demodulator for selecting a constellation point of a plurality of constellation points in accordance with the plurality of received component signals;
wherein the plurality of constellation points is defined by positions within an $N$-dimensional space obtained by applying an orthogonal transformation to a subset of the $N$-dimensional integer lattice $\mathbb{Z}^N$,
**characterized in that**
$N$ is a multiple of four; and
the orthogonal transformation has an $N$-by-$N$ matrix representation with absolute values of all elements on the main diagonal equal to a first value and with absolute values of all elements not on the main diagonal equal to a non-zero second value.

**5.** An apparatus according to any of claims 1 to 4, wherein the plurality of transmission channels comprises a plurality of different carriers in an orthogonal frequency division multiplexing scheme.

**6.** An apparatus according to any of claims 1 to 5, wherein the plurality of transmission channels comprises a plurality of different symbols in an orthogonal frequency division multiplexing scheme.

**7.** A method for transmitting a block of data over a plurality of transmission channels, the method comprising the steps of:

selecting a constellation point of a plurality of constellation points in accordance with the block of data to be transmitted, each of said constellation points having a plurality of components;
transmitting each component of the selected constellation point over a different one of the plurality of transmission channels,
wherein the plurality of constellation points is defined by positions within an $N$-dimensional space obtained by applying an orthogonal transformation to a subset of the $N$-dimensional integer lattice $\mathbb{Z}^N$,
**characterized in that**
$N$ is a multiple of four; and
the orthogonal transformation has an $N$-by-$N$ matrix representation with absolute values of all elements on the main diagonal equal to a first value and with absolute values of all elements not on the main diagonal equal to a non-zero second value.

**8.** A method according to claim 7, further comprising the step of
mapping each component of the selected constellation point to one of the plurality of transmission channels over which the component is to be transmitted, such that the fading of the transmission channels, over which the components of the selected constellation point are transmitted, is uncorrelated.

**9.** A method for receiving a block of data over a plurality of transmission channels, the method comprising the steps of:

receiving a plurality of component signals over the plurality of transmission channels,
demodulating the plurality of received component signals by selecting a constellation point of a plurality of constellation points in accordance with the plurality of received component signals;
wherein the plurality of constellation points is defined by positions within an $N$-dimensional space obtained by applying an orthogonal transformation to a subset of the $N$-dimensional integer lattice $\mathbb{Z}^N$,
**characterized in that**
$N$ is a multiple of four; and
the orthogonal transformation has an $N$-by-$N$ matrix representation with absolute values of all elements on the main diagonal equal to a first value and with absolute values of all elements not on the main diagonal equal to a non-zero second value.

**10.** A method according to any of claims 7 to 9, wherein the plurality of transmission channels comprises a plurality of different carriers in an orthogonal frequency division multiplexing scheme.

**11.** A method according to any of claims 7 to 10, wherein the plurality of transmission channels comprises a plurality of different symbols in an orthogonal frequency division multiplexing scheme.

**12.** A method for generating a multi-dimensional constellation for a digital modulation scheme in a data communication system, the method comprising the steps of
receiving a plurality of vectors of a multi-dimensional vector space;
obtaining constellation points of the multi-dimensional constellation by applying an orthogonal transformation to the plurality of vectors received,
wherein the orthogonal transformation is adapted for increasing the minimum number of different values in the components of any two distinct multi-dimensional constellation points relative to the minimum number of different values in the components of any two distinct vectors received,
**characterized in that**
the orthogonal transformation has an $N$-by-$N$ matrix representation, $N$ being a multiple of four, with absolute values of all elements on the main diagonal equal to a first value and with absolute values of all elements not on the main diagonal equal to a non-zero second value.

**13.** A method according to claim 12, further comprising the steps of
selecting a rotation factor $r$ as a real number between 0 and 1;

computing the first value $a$ by evaluating the expression $a = \sqrt{1 - \dfrac{r(N-1)}{N}}$ ;

computing the second value $b$ by evaluating the expression $b = \sqrt{\dfrac{r}{N}}$ ; and determining the orthogonal transformation by selecting for each element $(i,j)$ of its matrix representation a sign value $s_{i,j}$ such that

$$R = \begin{pmatrix} s_{1,1}a & s_{1,2}b & \cdots & & s_{1,N}b \\ s_{2,1}b & s_{2,2}a & & & \vdots \\ \vdots & & \ddots & & s_{N-1,N}b \\ s_{N,1}b & \cdots & s_{N,N-1}b & & s_{N,N}a \end{pmatrix}$$

is orthogonal.

**14.** A method according to claim 13, wherein the selected rotation factor maximizes the minimum number of different values in the components of any two distinct multi-dimensional constellation points.

**15.** A method according to claim any of claims 12 to 14, wherein the received plurality of vectors represents a subset of the $N$-dimensional integer lattice $\mathbb{Z}^N$ .

# Fig. 1A

# Fig. 1B

EP 2 288 048 A1

# Fig. 2

Fig. 3

# Fig. 4

EP 2 288 048 A1

EP 2 288 048 A1

# Fig. 5

$y_1$ ⋯ $y_N$ $h_1$ ⋯ $h_N$ → Rotated constellation demapping → $b_1$ ⋯ $b_{NB}$

# Fig. 6A

# Fig. 6B

Fig. 7

# Fig. 8

$y_1$  $h_1$  $s_1$  $y_N$  $h_N$  $s_N$

$1/2\sigma^2$

## Fig. 9

# Fig. 10

Fig. 11

# Fig. 12

# Fig. 13

410-1 — Demodulation chain 1

410-M — Demodulation chain M

420 — Symbol demapping and deinterleaving

430 — Demapping from complex symbols

1340 — Constellation demapping

450 — Bit deinterleaving

460 — FEC decoding

Europäisches
Patentamt
European
Patent Office
Office européen
des brevets

# EUROPEAN SEARCH REPORT

**Application Number**

EP 09 16 8370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MOHAMED OUSSAMA DAMEN ET AL: "Diagonal Algebraic Space-Time Block Codes" IEEE TRANSACTIONS ON INFORMATION THEORY, IEEE, US, vol. 48, no. 3, 1 March 2002 (2002-03-01), XP011028163 ISSN: 0018-9448 * paragraph [0III] - paragraph [00IV] * | 1-15 | INV. H04B7/02 |
| A,D | BOUTROS J ET AL: "Signal Space Diversity : A Power - and Bandwidth-Efficient Diversity Technique for the Rayleigh Fading Channel" IEEE TRANSACTIONS ON INFORMATION THEORY, IEEE, US, vol. 44, no. 4, 1 July 1998 (1998-07-01), pages 1453-1467, XP003001157 ISSN: 0018-9448 * paragraph [000I]; figure 1 * | 1,4,7,9, 12 | |
| A | GIANNAKIS G B ET AL: "Joint Coding-Precoding With Low-Complexity Turbo-Decoding" IEEE TRANSACTIONS ON WIRELESS COMMUNICATIONS, IEEE SERVICE CENTER, PISCATAWAY, NJ, US, vol. 3, no. 3, 1 May 2004 (2004-05-01), pages 832-842, XP011112298 ISSN: 1536-1276 * paragraph [000I]; figure 1 * * paragraph [00II] - paragraph [000C] * | 1,4-12 | **TECHNICAL FIELDS SEARCHED (IPC)**<br><br>H04B |
| A,D | BOULLÉ K ET AL: "Modulation schemes designed for the Rayleigh fading channel" PROCEEDINGS CISS 1992,, 1 March 1992 (1992-03-01), pages 288-293, XP009128746 * the whole document * | 1,4,7,9, 12 | |

The present search report has been drawn up for all claims

| Place of search | Date of completion of the search | Examiner |
|---|---|---|
| Munich | 11 February 2010 | Burghardt, Gisela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                      

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. Boulle ; J. C. Belfiore.** Modulation Scheme Designed for the Rayleigh Fading Channel. *CISS,* 1992
- **B. D. Jelicic ; S. Roy.** Design of Trellis Coded QAM for Flat Fading and AWGN Channels. *IEEE Transactions on Vehicular Technology,* February 1995, vol. 44
- **J. Boutros ; E. Viterbo.** Signal Space Diversity: A Power- and Bandwidth-Efficient Diversity Technique for the Rayleigh Fading Channel. *IEEE Transactions on Information Theory,* July 1998, vol. 44
- **M. O. Damen ; K. Abed-Meraim ; J. C. Belfiore.** Diagonal Algebraic Space-Time Block Codes. *IEEE Transactions on Information Theory,* March 2002, vol. 48